(19) Europäisches Patentamt
European Patent Office
Office européen des brevets

(11) **EP 0 926 481 B1**

(12) **EUROPÄISCHE PATENTSCHRIFT**

(45) Veröffentlichungstag und Bekanntmachung des Hinweises auf die Patenterteilung:
**06.05.2004   Patentblatt 2004/19**

(51) Int Cl.$^7$: **G01N 11/14**

(21) Anmeldenummer: **98890307.6**

(22) Anmeldetag: **19.10.1998**

(54) **Vorrichtung zur Bestimmung der Viskosität einer Flüssigkeit**

Device for determining the viscosity of a liquid

Dispositif pour déterminer la viscosité d'un liquide

(84) Benannte Vertragsstaaten:
**AT CH DE FR GB LI NL**

(30) Priorität: **18.12.1997  AT  214597**

(43) Veröffentlichungstag der Anmeldung:
**30.06.1999   Patentblatt 1999/26**

(73) Patentinhaber:
• **Stabinger, Hans, Dr.**
  **A-8010 Graz (AT)**
• **Leopold, Hans, O. Univ.-Prof. Dr.**
  **A-8043 Graz (AT)**
• **Heimel, Helmut, Dr.**
  **8010 Graz (AT)**

(72) Erfinder:
• **Stabinger, Hans, Dr.**
  **A-8010 Graz (AT)**
• **Leopold, Hans, O. Univ.-Prof. Dr.**
  **A-8043 Graz (AT)**
• **Heimel, Helmut, Dr.**
  **8010 Graz (AT)**

(74) Vertreter: **Gibler, Ferdinand, Dipl.Ing. Dr.**
**Patentanwalt**
**Dorotheergasse 7**
**1010 Wien (AT)**

(56) Entgegenhaltungen:
WO-A-91/14168          WO-A-94/20832
DE-A- 3 630 565        JP-A- 3 044 536
US-A- 5 331 844

**Beschreibung**

Die Erfindung betrifft eine Vorrichtung zur Bestimmung der Viskosität einer Flüssigkeit mit einem rotierbaren und mit der Meßflüssigkeit füllbaren, äußeren Hohlzylinder und einem im Inneren des äußeren Hohlzylinders befindlichen und von der Meßflüssigkeit umgebenen, inneren Zylinder, wobei der Innendurchmesser des äußeren Zylinders größer als der Außendurchmesser des inneren Zylinders ist, und wobei eine Vorrichtung zur Erzeugung eines auf die Rotationsbewegung des inneren Zylinders wirkenden Bremsmoments vorgesehen ist.

Die Bestimmung der Viskosität von Flüssigkeiten kann entweder in einem Kapillarviskosimeter durch Messung der Durchflußgeschwindigkeit durch Kapillaren oder in einem Rotationsviskosimeter durch Messung des Drehmoments zwischen zwei Zylinderkörpern mit dazwischen befindlichem, flüssigkeitsdurchströmten Spalt bei unterschiedlicher Drehzahl beider Zylinderkörper vorgenommen werden.

Bekannte Rotationsviskosimeter bestehen aus einem äußeren Hohlzylinder, in dem ein innerer Zylinder gelagert ist, sodaß ein möglichst genau definierter Spalt zwischen äußerem Hohlzylinder und innerem Zylinder gebildet wird. Bei Rotation des äußeren Hohlzylinders wirkt über den mit der Meßflüssigkeit gefüllten Spalt ein viskositätsabhängiges Drehmoment auf den inneren Zylinder. Dieses Drehmoment wird als Ausschlagsgröße einer Drehfeder oder über das Antriebsmoment gemessen und in den Viskositätswert umgerechnet.

Insbesondere die WO 91 14168 A offenbart ein Viskositätsmessgerät, gemäß Oberbegriff

Aus der US-A-5 331 844 geht eine Viskositätsmessgerät zur Bestimmung der Viskosität einer Flüssigkeit, die in einem geschlossenen Kanal fließt, hervor, mit einem Rotor, dessen Drehzahl direkt von der Fließgeschwindigkeit der Flüssigkeit abhängt, sowie mit Bremsmitteln, die die Drehzahl des Rotors reduzieren können, und einer Vorrichtung zur Messung der Drehzahl des Rotors im gebremsten und im ungebremsten Zustand. Als Bremsmittel wird insbesondere eine Wirbelstromelement und ein Brems-Magnetelement beschrieben.

Die Nachteile bekannter Vorrichtungen bestehen einerseits darin, daß durch die Lagerreibung des inneren Zylinders bzw. eines Rotors die Meßgenauigkeit relativ gering ist und daß eine Bestimmung des Viskositätsbereiches über mehrere Größenordnungen hinweg aus meßtechnischen Gründen nicht möglich ist.

Mittels reibungsarmer Luftlager und gestufter Zylinderabmessungen kann die Genauigkeit zwar gesteigert werden, der apparative Aufwand dafür steigt aber überproportional an.

Aufgabe der Erfindung ist es, eine Vorrichtung der eingangs genannten Art anzugeben, mit der bei relativ geringem technischen Aufwand eine sehr präzise Bestimmung der Viskosität vorgenommen werden kann.

Weitere Aufgabe der Erfindung ist es, eine digitale Erfassung der Meßwertgrößen zu ermöglichen und eine Messung über mehrere Größenordnungen der Viskosität zu erlauben.

Erfindungsgemäß wird dies dadurch erreicht, daß die Vorrichtung zur Erzeugung eines auf die Rotationsbewegung des inneren Zylinders wirkenden Bremsmoments durch ein auf oder in dem inneren Zylinder angeordnetes, elektrisch leitendes, vorzugsweise ringförmiges Wirbelstromelement und ein außerhalb des äußeren Hohlzylinders angeordnetes Brems-Magnetelement zur Erzeugung eines quer zur Rotationsachse des äußeren Hohlzylinders orientierten Magnetfeldes gebildet ist und dass der innere Zylinder in der Meßflüssigkeit schwimmend rotierbar anordenbar ist.

Damit kann eine Verzögerung der Drehzahl des inneren Zylinders durch die Wirkung eines Magnetfeldes erzielt werden, wodurch sich insgesamt eine meßbare Drehzahl $n_2$ des inneren Zylinders einstellt, die aus der bremsenden Wirkung der Wirbelstrombremse und der antreibenden Wirkung des äußeren Hohlzylinders resultiert, die von der Viskosität der Meßflüssigkeit abhängt.

Auf diese Weise fällt weiters die mechanische Lagerung für den inneren Zylinder und damit deren Reibungsverluste weg, da der innere Zylinder innerhalb der Meßflüssigkeit schwimmend rotiert und dabei einen Flüssigkeitsspalt ausbildet, über den die Rotationsbewegung des äußeren Hohlzylinders auf den inneren Zylinder übertragen wird.

Die Viskosität kann mit Hilfe der erfindungsgemäßen Vorrichtung aus dem Drehzahlverhältnis von angetriebenem äußeren Hohlzylinder und gebremstem inneren Zylinder berechnet werden. Dadurch kann das digital leicht erfaßbare Drehzahlverhältnis als primäre Meßgröße herangezogen und durch die praktisch unbeschränkte Genauigkeit der digitalen Datenverarbeitung mit einer einzigen Vorrichtungskonfiguration ein Viskositätsmeßbereich von mehreren Größenordnungen überstrichen werden.

In weiterer Ausbildung der Erfindung kann vorgesehen sein, daß das Masse-Volumen-Verhältnis des inneren Zylinders kleiner als die Dichte der Meßflüssigkeit ist, sodaß bei Rotation des äußeren Hohlzylinders infolge des zentrifugalen Druckgefälles der innere Zylinder in einer konzentrischen Position relativ zum äußeren Hohlzylinder schwimmend in der Meßflüssigkeit rotiert.

Auf diese Weise fällt die mechanische Lagerung für den inneren Zylinder und damit deren Reibungsverluste weg, da der innere Zylinder innerhalb der Meßflüssigkeit schwimmend rotiert und dabei einen Flüssigkeitsspalt ausbildet, über den die Rotationsbewegung des äußeren Hohlzylinders auf den inneren Zylinder übertragen wird.

In weiterer Ausbildung der Erfindung kann vorgesehen sein, daß vorzugsweise im Bereich der stirnseitigen Enden des inneren Zylinders jeweils zumindest ein Distanz-Magnetelement vorgesehen ist, dessen Wirkungsbereich sich jeweils im Wirkungsbereich eines innerhalb des äußeren Zylinders fest angeordneten Lager-Magnetelements befindet, wobei gegenüberliegende Magnetpole der Distanz- und Lager-Magnetelemente jeweils gleiche Polarität aufweisen.

Durch die abstoßende Wirkung der Magnetelemente kann eine reibungslose achsiale Positionierung des rotierenden inneren Zylinders erreicht werden.

Gemäß einer weiteren Variante der Erfindung kann vorgesehen sein, daß die Lager-Magnet-Elemente zylinderförmig mit entlang der Rotationsachse des äußeren Hohlzylinders verlaufenden Durchgangsbohrungen für die Meßflüssigkeit ausgebildet sind.

Dadurch wird eine Zu- und Abfuhr von Meßflüssigkeit während der Drehbewegung ermöglicht.

Weiters kann vorgesehen sein, daß eine Meßeinheit zur Ermittlung der Drehzahl des inneren Zylinders vorgesehen ist, welche gemäß einem weiteren Ausführungsbeispiel der Erfindung dadurch gebildet sein kann, daß die Meßeinheit zur Ermittlung der Drehzahl durch ein innerhalb des inneren Zylinders angeordnetes Meß-Magnetelement und durch einen außerhalb des äußeren Hohlzylinders angeordneten Hall-Sensor gebildet ist.

Damit kann eine berührungslose Drehzahlmessung verwirklicht werden, die keine Reibungsverluste in der Rotationsbewegung des inneren Zylinders entstehen läßt.

Um eine Zu- und Ableitung der Meßflüssigkeit während der Rotationsbewegung des äußeren Hohlzylinders mit geringstmöglicher Beeinflussung zu ermöglichen, kann gemäß einer weiteren Variante der Erfindung vorgesehen sein, daß der äußere Hohlzylinder an seinen sich verjüngenden Enden in jeweils einem Rotationslager rotierbar gehalten ist, und daß die achsiale Flüssigkeitszu- und -ableitung in das Innere des äußeren Hohlzylinders über Zuleitungshohlräume innerhalb der Rotationslager erfolgt, welche um die Einlaßstellen bzw. Auslaßstellen der Flüssigkeit in den bzw. aus dem äußeren Hohlzylinder angeordnet sind.

Zur Erzeugung der Rotationsbewegung des äußeren Hohlzylinders kann eine Antriebseinheit vorgesehen sein, die vorzugsweise an eines der stirnseitigen Enden des äußeren Hohlzylinders gekoppelt ist und über die der äußere Hohlzylinder mit einer konstanten Drehzahl rotierbar ist.

Schließlich kann zur Gewährleistung konstanter Temperaturverhältnisse während der Messung vorgesehen sein, daß der äußere Hohlzylinder von einem temperaturgeregelten Gehäuse umgeben ist, wobei vorzugsweise ein kleiner Luftspalt zwischen Gehäuse und äußerem Hohlzylinder verbleibt.

Weiters betrifft die Erfindung ein Verfahren zur Bestimmung der Viskosität einer Flüssigkeit mit einer erfindungsgemäßen Vorrichtung.

Um eine technisch einfache Erfassung und Verarbeitung der zur Bestimmung der Viskosität erforderlichen Meßgrößen zu ermöglichen, wird erfindungsgemäß vorgesehen, daß Meßflüssigkeit in den Raum zwischen dem äußeren Hohlzylinder und dem inneren Zylinder verbracht wird, der äußere Hohlzylinder mit konstanter Drehzahl in Rotation verbracht wird, der innere Zylinder durch zentrifugales Druckgefälle und/oder Distanz- und Lagermagnetelemente positioniert wird, der innere Zylinder in seiner Drehbewegung gegenüber dem äußeren Hohlzylinder mittels des Wirbelstromelements und des Bremsmagnetelements gebremst wird, dass die Drehzahl $n_1$ des angetriebenen äußeren Hohlzylinders und die Drehzahl $n_2$ des gebremsten inneren Zylinders gemessen wird, und dass aus dem Verhältnis der Drehzahlen $n_1$, $n_2$ die Viskosität der zwischen dem äußeren Hohlzylinder und dem inneren Zylinder befindlichen Meßflüssigkeit errechnet wird.

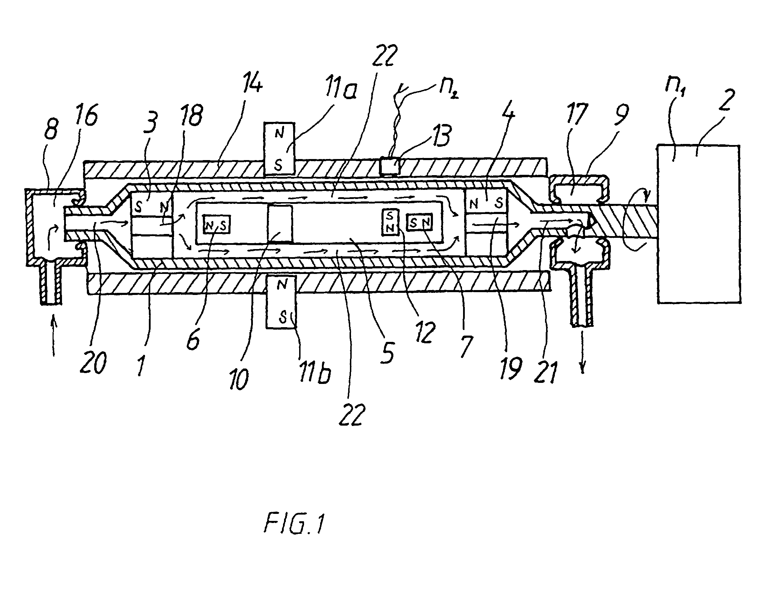

Nachfolgend wird die Erfindung anhand eines in der Zeichnung dargestellten Ausführungsbeispiels der erfindungsgemäßen Vorrichtung eingehend erläutert, wobei Fig.1 einen Längsschnitt durch die im Betrieb befindliche Vorrichtung zeigt.

In Fig.1 ist eine Vorrichtung zur Bestimmung der Viskosität einer Flüssigkeit dargestellt, die einen rotierbaren äußeren Hohlzylinder 1 und einen im Inneren des äußeren Hohlzylinders befindlichen, inneren Zylinder 5 umfaßt. Die Darstellung in der Fig.1 zeigt jene Lage des inneren Zylinders 5, den dieser annimmt, wenn der äußere Hohlzylinder 1 rotiert wird und die Meßflüssigkeit den Raum zwischen dem äußeren Hohlzylinder 1 und dem inneren Zylinder 5 ausfüllt. Die Meßflüssigkeit kann auch die erfindungsgemäße Vorrichtung durchströmen. Der Strömungsverlauf der Meßflüssigkeit ist in Fig.1 mit Pfeilen symbolisiert.

Der Innendurchmesser des äußeren Zylinders 1 ist zu diesem Zweck größer als der Außendurchmesser des inneren Zylinders 5, sodaß zwischen der Innenfläche des äußeren Hohlzylinders 1 und des inneren Zylinders 5 ein zylinderringförmiger Spaltraum 22 ausgebildet werden kann.

Da gemäß einer Ausbildung der Erfindung das Masse-Volumen-Verhältnis des inneren Zylinders 5 so gewählt ist, daß es kleiner als die Dichte der Meßflüssigkeit ist, bewegt sich der innere Zylinder 5 bei Rotation des äußeren Hohlzylinders 1 infolge des zentrifugalen Druckgefälles in eine konzentrischen Position relativ zum äußeren Hohlzylinder 1 und beginnt dort schwimmend in der Meßflüssigkeit zu rotieren.

Damit ist der innere Zylinder 5 in radialer Richtung zentriert. In achsialer Richtung wird er durch Distanz-Magnetelemente 6, 7 reibungslos in seiner Position gehalten, die im Bereich der stirnseitigen Enden des inneren Zylinders 5 vorgesehen sind. Ihr Wirkungsbereich befindet sich jeweils im Wirkungsbereich der innerhalb des äußeren Zylinders 1 fest angeordneten Lager-Magnetelemente 3, 4. Der Nordpol N des Lager-Magnetelements 3 bzw. 4 liegt genau dem Nordpol N des Distanz-Magnetelements 6 bzw. 7 gegenüber, sodaß die gegenüberliegenden Magnetpole der Distanz- und Lager-Magnetelemente 6, 7, 3, 4 jeweils gleiche Polarität aufweisen und damit eine Abstoßung bewirken, die verhindert, daß eine in Längsrichtung des inneren Zylinders 5 auftretende Bewegungskomponente eine Verschiebung desselben bewirken kann. Genauso könnte nach Belieben auch Südpol und Südpol in gegenüberliegende Lage gebracht werden.

Die Lager-Magnet-Elemente 3, 4 sind in diesem Ausführungsbeispiel zylinderförmig mit entlang der Rotationsachse des äußeren Hohlzylinders 1 verlaufenden Durchgangsbohrungen 18, 19 für das Hindurchströmen der Meßflüssigkeit ausgebildet und an der Innenwand des äußeren Hohlzylinders 1 fixiert. Zwischen den stirnseitigen Enden des inneren Zylinders 5 und den Lager-Magnet-Elementen 3, 4 ist genügend Raum freigelassen, um ein Vorbeiströmen der Meßflüssigkeit zu gewährleisten.

Der äußere Hohlzylinder 1 ist an seinen sich verjüngenden Enden in jeweils einem Rotationslager 8, 9 rotierbar gehalten, wobei an eines der stirnseitigen Enden des äußeren Hohlzylinders 1 eine Antriebseinheit 2, z.B. ein Elektromotor, gekoppelt ist, über den der äußere Hohlzylinder 1 mit einer konstanten Drehzahl $n_1$ rotierbar ist.

Die achsiale Flüssigkeitszu- und ableitung in das Innere des äußeren Hohlzylinders 1 erfolgt über Zuleitungshohlräume 16, 17 innerhalb der Rotationslager 8, 9, welche um die Einlaßstellen bzw. Auslaßstellen der Flüssigkeit in den bzw. aus dem äußeren Hohlzylinder 1 dichtend angeordnet sind.

Die Art der Meßflüssigkeitszu- und ableitung kann aber im Rahmen der Erfindung auch auf andere gleichwertige Art verwirklicht werden.

Erfindungsgemäß ist eine Vorrichtung zur Erzeugung eines auf die Rotationsbewegung des inneren Zylinders 1 wirkenden Bremsmoments vorgesehen, die durch ein auf oder in dem inneren Zylinder 5 vorzugsweise rotationssymmetrisch angeordnetes, elektrisch leitendes, vorzugsweise ringförmiges Wirbelstromelement 10 gebildet ist, welches aufgrund der Rotationsbewegung des inneren Zylinders 5 gegenüber außerhalb des äußeren Hohlzylinders 1 angeordneten Brems-Magnetelementen 11a, 11b zur Erzeugung eines quer zur Rotationsachse des äußeren Hohlzylinders 1 orientierten Magnetfeldes bewegt wird. Die sich als Folge der Relativbewegung in dem Wirbelstromelement 10 ausbildenden Wirbelströme erzeugen ein drehzahlabhängiges Bremsmoment $M_B$, das auf die Rotationsbewegung des inneren Zylinders 5 verzögernd wirkt.

Weiters ist eine Meßeinheit 12, 13 zur Ermittlung der Drehzahl des inneren Zylinders 5 vorgesehen, die durch ein innerhalb des inneren Zylinders 5 angeordnetes Meß-Magnetelement 12 und durch einen außerhalb des äußeren Hohlzylinders 1 angeordneten Hall-Sensor 13 gebildet ist. Die Pole S, N des Meß-Magnetelements 12 sind quer zur Rotationsachse des äußeren Hohlzylinders 1 orientiert. Durch die Rotationsbewegung entsteht im Hall-Sensor 13 eine mit der Rotationsdrehzahl $n_2$ des inneren Zylinders 5 oszillierende Spannung, die zur Drehzahlmessung herangezogen werden kann.

Aufgrund des drehzahlabhängigen Bremsmoments wird bei einer Drehzahl $n_2$ des inneren Zylinders 5 dieser mit dem Moment

$$M_B = C_1\, n_2$$

gebremst, wobei die Konstante $C_1$ von der Größe des in den Brems-Magnetelementen 11a, 11b erzeugten Magnetfeldes und der Leitfähigkeit des Ringes 10 bestimmt wird.

Durch den über die Bremseinheit hervorgerufenen Drehzahlunterschied zwischen dem angetriebenen äußeren Hohlzylinder 1 und dem mitgenommenen inneren Zylinder 5 entsteht im flüssigkeitsgefüllten Spalt 22 ein Geschwindigkeitsgefälle, durch welches ein vikositätsabhängiges Moment

$$M_v = C_2\, \eta\, (n_1 - n_2)$$

auf den inneren Zylinder 5 wirkt, wobei $\eta$ die Viskosität der Meßflüssigkeit bedeutet und $C_2$ eine Funktion von Zylinderlänge und Spaltbreite ist, und somit den Einfluß des zwischen äußerem Hohlzylinder 1 und innerem Zylinder 5 eingeschlossenen Flüssigkeitsvolumens repräsentiert.

Da der innere Zylinder 5 frei von Lagerreibung in der Meßflüssigkeit schwimmt, muß

$$M_v = M_B$$

gelten. Daraus folgt

$$C_2\, \eta\, (n_1 - n_2) = C_1\, n_2$$

$$1/\eta = C_2/C_1\, (n_1/n_2 - 1)$$

$C_2/C_1$ wird als Apparatekonstante K definiert, sodaß aus dem Verhältnis der Drehzahlen die Viskosität nach der Formel

$$\eta = K/(n_1/n_2 - 1)$$

berechnet werden kann.

Die Konstante K wird durch eine Messung an einer Substanz mit bekannter Viskosität ermittelt. Um für die Messung konstante Temperaturverhältnisse zu schaffen, ist der äußere Hohlzylinder 1 in einem temperaturgeregelten Gehäuse 14 so eingebaut, daß zwischen dem Gehäuse 14 und dem Hohlzylinder 1 nur ein enger Luftspalt verbleibt.

**Patentansprüche**

1. Vorrichtung zur Bestimmung der Viskosität einer Flüssigkeit mit einem rotierbaren und mit der Meßflüssigkeit füllbaren, äußeren Hohlzylinder und einem im Inneren des äußeren Hohlzylinders (1) befindlichen und von der Meßflüssigkeit umgebenen, inneren Zylinder (5), wobei der Innendurchmesser des äußeren Zylinders größer als der Außendurchmesser des inneren Zylinders ist, und wobei eine Vorrichtung zur Erzeugung eines auf die Rotationsbewegung des inneren Zylinders wirkenden Bremsmoments vorgesehen ist, **dadurch gekennzeichnet, daß** die Vorrichtung zur Erzeugung eines auf die Rotationsbewegung des inneren Zylinders wirkenden Bremsmoments durch ein auf oder in dem inneren Zylinder (5) angeordnetes, elektrisch leitendes, vorzugsweise ringförmiges Wirbelstromelement (10) und ein außerhalb des äußeren Hohlzylinders (1) angeordnetes Brems-Magnetelement (11a, 11b) zur Erzeugung eines quer zur Rotationsachse des äußeren Hohlzylinders (1) orientierten Magnetfeldes gebildet ist und daß der innere Zylinder (5) in der Meßflüssigkeit schwimmend rotierbar anordenbar ist.

2. Vorrichtung nach Anspruch 1, **dadurch gekennzeichnet, daß** bei Rotation des äußeren Hohlzylinders (1) der innere Zylinder (5) in einer konzentrischen Position relativ zum äußeren Hohlzylinder (1) schwimmend in der Meßflüssigkeit rotierend anordenbar ist, wobei das Masse-Volumen-Verhältnis des inneren Zylinders (5) kleiner als die Dichte der Meßflüssigkeit ist.

3. Vorrichtung nach Anspruch 1 oder 2, **dadurch gekennzeichnet, daß** vorzugsweise im Bereich der stirnseitigen Enden des inneren Zylinders (1) jeweils zumindest ein Distanz-Magnetelement (6, 7) vorgesehen ist, dessen Wirkungsbereich sich jeweils im Wirkungsbereich eines innerhalb des äußeren Zylinders fest angeordneten Lager-Magnetelements (3, 4) befindet, wobei gegenüberliegende Magnetpole der Distanz- und Lager-Magnetelemente (6, 7, 3, 4) jeweils gleiche Polarität aufweisen.

4. Vorrichtung nach Anspruch 1, 2 oder 3, **dadurch gekennzeichnet, daß** die Lager-Magnet-Elemente (3, 4) zylinderförmig mit entlang der Rotationsachse des äußeren Hohlzylinders (1) verlaufenden Durchgangsbohrungen (18, 19) für die Meßflüssigkeit ausgebildet sind.

5. Vorrichtung nach einem der Ansprüche 1 bis 4, **dadurch gekennzeichnet, daß** eine Meßeinheit (12, 13) zur Ermittlung der Drehzahl des inneren Zylinders (5) vorgesehen ist.

6. Vorrichtung nach Anspruch 5, **dadurch gekennzeichnet, daß** die Meßeinheit zur Ermittlung der Drehzahl durch ein innerhalb des inneren Zylinders angeordnetes Meß-Magnetelement (12) und durch einen außerhalb des äußeren Hohlzylinders (1) angeordneten Hall-Sensor (13) gebildet ist.

7. Vorrichtung nach einem der vorhergehenden Ansprüche, **dadurch gekennzeichnet, daß** der äußere Hohlzylinder (1) an seinen sich verjüngenden Enden in jeweils einem Rotationslager (8, 9) rotierbar gehalten ist, und daß die achsiale Flüssigkeitszu- und ableitung in das Innere des äußeren Hohlzylinders (1) über Zuleitungshohlräume innerhalb der Rotationslager (8, 9) erfolgt, welche um die Einlaßstellen bzw. Auslaßstellen der Flüssigkeit in den bzw. aus dem äußeren Hohlzylinder (1) angeordnet sind.

8. Vorrichtung nach einem der vorhergehenden Ansprüche, **dadurch gekennzeichnet, daß** eine Antriebseinheit (2) vorgesehen ist, die vorzugsweise an eines der stirnseitigen Enden des äußeren Hohlzylinders (1) gekoppelt ist und über die der äußere Hohlzylinder (1) mit einer konstanten Drehzahl rotierbar ist.

9. Vorrichtung nach einem der vorhergehenden Ansprüche, **dadurch gekennzeichnet, daß** der äußere Hohlzylinder (1) von einem temperaturgeregelten Gehäuse (14) umgeben ist, wobei vorzugsweise ein kleiner Luftspalt zwischen Gehäuse (14) und äußerem Hohlzylinder (1) verbleibt.

10. Verfahren zur Bestimmung der Viskosität einer Flüssigkeit mit einer Vorrichtung nach einem der vorhergehenden Ansprüche 1 bis 10, **dadurch gekennzeichnet, daß** Meßflüssigkeit in den Raum zwischen dem äußeren Hohlzylinder (1) und dem inneren Zylinder (5) verbracht wird, der äußere Hohlzylinder (1) mit konstanter Drehzahl in Rotation verbracht wird, der innere Zylinder (5) durch zentrifugales Druckgefälle und/oder Distanz- und Lagermagnetelemente (6, 7, 3, 4) positioniert wird, der innere Zylinder (5) in seiner Drehbewegung gegenüber dem äußeren Hohlzylinder (1) mittels des Wirbelstromelements (10) und des Bremsmagnetelements (11a, 11b) gebremst wird, daß die Drehzahl $(n_1)$ des angetriebenen äußeren Hohlzylinders (1) und die Drehzahl $(n_2)$ des gebremsten inneren Zylinders (5) gemessen wird, und daß aus dem Verhältnis der Drehzahlen $(n_1, n_2)$ die Viskosität der zwischen dem äußeren Hohlzylinder (1) und dem inneren Zylinder (5) befindlichen Meßflüssigkeit errechnet wird.

## Claims

1. An apparatus for determining the viscosity of a liquid with a rotatable outer hollow cylinder which can be filled with the measuring liquid and an inner cylinder (5) which is enclosed by the measuring liquid and is situated in the interior of the outer hollow cylinder (1), with the inside diameter of the outer cylinder being larger than the outside diameter of the inner cylinder and with an apparatus being provided for producing a braking torque acting upon the rotational movement of the inner cylinder, **characterized in that** the apparatus for producing the braking torque acting upon the rotational movement of the inner cylinder is formed by an electrically conductive, preferably annular eddy current element (10) which is arranged on or in the inner cylinder (5) and by a brake magnet element (11a, 11b) which is arranged outside of the outer hollow cylinder (1) for producing a magnetic field oriented transversally to the rotational axis of the outer hollow cylinder (1), and that the inner cylinder (5) can be arranged so as to be floatingly rotatable in the measuring liquid.

2. An apparatus as claimed in claim 1, **characterized in that** in the case of rotation of the outer hollow cylinder (1) the inner cylinder (5) can be arranged in a concentric position relative to the outer hollow cylinder (1) so as to rotatingly float in the measuring liquid, with the mass-to-volume ratio of the inner cylinder (5) being smaller than the density of the measuring liquid.

3. An apparatus as claimed in claim 1 or 2, **characterized in that** at least one magnetic spacer element (6, 7) each is provided preferably in the region of the face-side ends of the inner cylinder (1), with the sphere of influence of said spacer element each being situated in the sphere of influence of a magnetic bearing element (3, 4) which is fixedly arranged within the outer cylinder, with opposite magnetic poles of the magnetic spacer and bearing elements (6, 7, 3, 4) each having the same polarity.

4. An apparatus as claimed in claim 1, 2 or 3, **characterized in that** the magnetic bearing elements (3, 4) are cylindrically arranged with pass-through bores (18, 19) for the measuring liquid which extend along the axis of rotation of the outer hollow cylinder (1).

5. An apparatus as claimed in one of the claims 1 to 4, **characterized in that** a measuring unit (12, 13) is provided for determining the speed of the inner cylinder (5).

6. An apparatus as claimed in claim 5, **characterized in that** the measuring unit for determining the speed is formed by a magnetic measuring element (12) which is arranged within the inner cylinder and by a Hall sensor (13) arranged outside of the outer hollow cylinder (1).

7. An apparatus as claimed in one of the preceding claims, **characterized in that** the outer hollow cylinder (1) is rotatably held at its tapering ends in one rotational bearing (8, 9) each and that the axial liquid feeding and discharging into the interior of the outer hollow cylinder (1) occurs via hollow feeding chambers within the rotational bearing (8, 9) which are arranged about the inlet points or outlet points of the liquid into or out of the outer hollow cylinder (1).

8. An apparatus as claimed in one of the preceding claims, **characterized in that** a drive unit (2) is provided which is preferably coupled with one of the face-side ends of the outer hollow cylinder (1) and through which the outer hollow cylinder (1) can be rotated at a constant speed.

9. An apparatus as claimed in one of the preceding claims, **characterized in that** the outer hollow cylinder (1) is enclosed by a temperature-controlled housing (14), with preferably a small air gap remaining between the housing (14) and the outer hollow cylinder (1).

10. A method for determining the viscosity of a liquid with an apparatus as claimed in one of the preceding claims 1 to 10, **characterized in that** the measuring liquid is brought into the space between the outer hollow cylinder (1) and the inner cylinder (5), the outer hollow cylinder (1) is made to rotate at a constant speed, the inner cylinder (5) is positioned by centrifugal pressure difference and/or magnetic spacer and bearing elements (6, 7, 3, 4), the inner cylinder (5) is braked in its rotary movement relative to the outer hollow cylinder (1) by means of the eddy current element (10) and the magnetic braking element (11a, 11b), the speed ($n_1$) of the driven outer hollow cylinder (1) and the speed ($n_2$) of the braked inner cylinder (5) is measured and that the viscosity of the measuring liquid situated between the outer hollow cylinder (1) and the inner cylinder (5) is calculated from the ratio of the speeds ($n_1$, $n_2$).

## Revendications

1. Dispositif pour déterminer la viscosité d'un liquide avec un cylindre creux extérieur capable de rotation et pouvant être rempli avec le liquide à mesurer et un cylindre intérieur (5) situé à l'intérieur du cylindre creux extérieur (1) et environné par le liquide à mesurer, dans lequel le diamètre intérieur du cylindre extérieur est plus grand que le diamètre extérieur du cylindre intérieur, et dans lequel il est prévu un dispositif destiné à produire un moment de freinage agissant sur le mouvement de rotation du cylindre intérieur, **caractérisé en ce que** le dispositif destiné à produire un moment de freinage agissant sur le mouvement de rotation du cylindre intérieur est formé par un élément à courant de Foucault (10) conducteur électrique, de préférence annulaire, disposé sur ou dans le cylindre intérieur (5), et un élément magnétique de freinage (11a, 11b) disposé à l'extérieur du cylindre creux extérieur (1) et destiné à produire un champ magnétique orienté perpendiculairement à l'axe de rotation du cylindre creux extérieur (1), et **en ce que** le cylindre intérieur (5) peut être disposé de manière à flotter avec possibilité de rotation dans la liquide à mesurer.

2. Dispositif selon la revendication 1, **caractérisé en ce que** lors de la rotation du cylindre creux extérieur (1), le cylindre intérieur (5) peut être disposé de manière à flotter dans le liquide à mesurer avec possibilité de rotation dans une position concentrique par rapport au cylindre creux extérieur (1), le rapport entre la masse et le volume du cylindre intérieur (5) étant inférieur à la densité du liquide à mesurer.

3. Dispositif selon la revendication 1 ou 2, **caractérisé en ce qu'**il est prévu, de préférence au niveau de chaque extrémité frontale du cylindre intérieur (1), au moins un élément magnétique d'écartement (6, 7) dont la zone d'action se trouve dans la zone d'action d'un élément magnétique de support (3, 4) disposé de manière fixe à l'intérieur du cylindre extérieur, les pôles magnétiques opposés des éléments magnétiques d'écartement et de support (6, 7, 3, 4) ayant à chaque fois la même polarité.

4. Dispositif selon la revendication 1, 2 ou 3, **caractérisé en ce que** les éléments magnétiques de support (3, 4) sont de forme cylindrique avec des trous de passage (18, 19) pour le liquide à mesurer orientés le long de l'axe de rotation du cylindre creux extérieur (1).

5. Dispositif selon l'une quelconque des revendications 1 à 4, **caractérisé en ce qu'**il est prévu une unité de mesure (12, 13) destinée à déterminer la vitesse de rotation du cylindre intérieur (5).

6. Dispositif selon la revendication 5, **caractérisé en ce que** l'unité de mesure destinée à déterminer la vitesse de rotation est formée par un élément magnétique de mesure (12) disposé à l'intérieur du cylindre intérieur et par un capteur à effet Hall (13) disposé à l'extérieur du cylindre creux extérieur (1).

7. Dispositif selon l'une quelconque des revendications précédentes, **caractérisé en ce que** le cylindre creux extérieur (1) est retenu avec possibilité de rotation à chacune de ses extrémités qui se rétrécissent dans un palier de rotation (8, 9), et **en ce que** l'arrivée et l'évacuation axiales du liquide à l'intérieur du cylindre creux extérieur (1) passent à l'intérieur des paliers de rotation (8, 9), lesquels sont disposés autour de points d'entrée du liquide dans le cylindre creux extérieur (1) et de points de sortie de celui-ci.

8. Dispositif selon l'une quelconque des revendications précédentes, **caractérisé en ce qu'**il est prévu une unité d'entraînement (2), qui est de préférence couplée à l'une des extrémités frontales du cylindre creux extérieur (1) et qui peut entraîner le cylindre creux extérieur (1) en rotation à une vitesse de rotation constante.

9. Dispositif selon l'une quelconque des revendications précédentes, **caractérisé en ce que** le cylindre creux extérieur (1) est entouré par un corps (14) à température régulée, un petit intervalle étant de préférence ménagé entre le corps (14) et le cylindre creux extérieur (1).

10. Procédé pour déterminer la viscosité d'un liquide avec un dispositif selon l'une quelconque des revendications 1 à 10, **caractérisé en ce que** du liquide à mesurer est amené dans l'espace ménagé entre le cylindre creux extérieur (1) et le cylindre intérieur (5), le cylindre creux extérieur (1) est entraîné en rotation à une vitesse de rotation constante, le cylindre intérieur (5) est positionné par la baisse de pression centrifuge et/ou par des éléments magnétiques d'écartement et de support (6, 7, 3, 4), le cylindre intérieur (5) est freiné dans son mouvement de rotation par rapport au cylindre creux extérieur (1) au moyen de l'élément à courant de Foucault (10) et de l'élément magnétique de freinage (11a, 11b), **en ce que** la vitesse de rotation ($n_1$) du cylindre creux extérieur (1) entraîné et la vitesse de rotation ($n_2$) du cylindre intérieur (5) freiné est mesurée, et **en ce que** la viscosité du liquide à mesurer qui se trouve entre le cylindre creux extérieur (1) et le cylindre intérieur (5) est calculée à partir du rapport entre les vitesses de rotation ($n_1$, $n_2$).

FIG.1